# EUROPÄISCHE PATENTSCHRIFT

(11) **EP 1 808 946 B1**
(45) Veröffentlichungstag und Bekanntmachung des Hinweises auf die Patenterteilung: **28.09.2016**
(21) Anmeldenummer: 06125713.5
(22) Anmeldetag: 08.12.2006
(51) Int. Cl.: H02H 11/00, G01R 31/02

(54) **Verfahren zur Überwachung eines abschaltbaren Kabels in einem elektrischen Netz, dafür geeignete Überwachungsvorrichtung sowie Überwachungssystem**
Method for monitoring a cable which can be disconnected in a network, appropriate monitoring device and monitoring system therefor
Procédé de surveillance d'un câble pouvant être déconnecté dans un réseau électrique, dispositif de surveillance correspondant tout comme système de surveillance

(30) Priorität: 17.01.2006 DE 102006002245
(43) Veröffentlichungstag der Anmeldung: 18.07.2007
(73) Patentinhaber: Siemens Aktiengesellschaft, 80333 München (DE)
(72) Erfinder: Quitschau, Joachim, 21465 Reinbek (DE); Rohmann, Frank, 21514 Büchen (DE)

(56) Entgegenhaltungen:
- EP-A- 0 637 866
- DE-A1- 19 518 318
- JP-A- 6 194 401
- US-A1- 2005 099 170
- US-B1- 6 597 552

## Beschreibung

Die Erfindung betrifft ein Verfahren zur Überwachung eines abschaltbaren Kabels in einem elektrischen Netz mit Hilfe einer Überwachungsvorrichtung gemäß Patentanspruch 1.

Für wichtige Verbraucher oder Verbrauchergruppen in elektrischen Netzen ist oftmals zur Verbesserung der Ausfallsicherheit neben einer Hauptstromeinspeisung noch eine Ersatzstromeinspeisung vorgesehen, die bei einem Ausfall der Hauptstromeinspeisung zugeschaltet wird. Dies betrifft insbesondere Bordnetze auf Marineschiffen, bei denen wichtige Hauptverteiler eine automatische Umschalteinrichtung mit einer Haupt- und Ersatzspeisung aufweisen, wobei die Hauptspeisung und die Ersatzspeisung wiederum aus unterschiedlichen, räumlich getrennt voneinander aufgestellten Hauptschalttafeln gespeist werden.

Es ist bereits bekannt, sämtliche netzseitig, d.h. auf Seite der Hauptschalttafeln, und verbraucherseitig, d.h. auf Seite der Hauptverteiler, zugeschalteten, und somit mit der Netzspannung beaufschlagten Kabel mit Hilfe einer übergeordneten Überwachungsvorrichtung auf Störungsfreiheit zu überwachen. Ein solches Überwachungsverfahren ist aus US 2005/099170 und EP 0 637 866 bekannt. Netzseitig wie auch verbraucherseitig abgeschaltete Kabel wie das der Ersatzstromeinspeisung werden jedoch von dieser Überwachung nicht erfasst. Ein Zuschalten der Ersatzstromeinspeisung darf jedoch nur erfolgen, wenn keine Störung auf dem zuzuschaltenden Kabel vorliegt, da eine störungsbehaftete Ersatzstromeinspeisung, insbesondere bei Mehrfachkurzschlüssen, zum Totalausfall des Bordnetzes führen kann.

Ausgehend hiervon ist es Aufgabe der vorliegenden Erfindung, ein Verfahren zur Überwachung eines abschaltbaren Kabels in einem elektrischen Netz anzugeben, die es ermöglichen, dass nur ein störungsfreies Kabel dem elektrischen Netz zugeschaltet wird. Störungen des elektrischen Netzes und anderer aktiver Überwachungen durch die Kabelüberwachung sollen dabei vermieden werden.

Die Lösung der auf das Verfahren gerichteten Aufgabe gelingt durch ein Verfahren gemäß Patentanspruch 1. Vorteilhafte Ausgestaltungen sind jeweils Gegenstand der Unteransprüche.

Das erfindungsgemäße Verfahren sieht vor, dass das Kabel allpolig von dem elektrischen Netz abgeschaltet wird und dass die Überwachungsvorrichtung nach dem allpoligen Abschalten des Kabels eine Beaufschlagung des Kabels mit einer Messspannung, eine Isolationsüberwachung zur Überwachung des Isolationswiderstandes der Adern des Kabel gegen Erd-/Massepotential des elektrischen Netzes mit Hilfe der Messspannung und eine Kurzschlussüberwachung zur Überwachung der Adern auf einen Kurzschluss zwischen zwei oder mehr Adern mit Hilfe der Messspannung aktiviert und vor einem Zuschalten des Kabels zu dem elektrischen Netz deaktiviert.

Unter einem allpoligen Abschalten des Kabels wird hierbei verstanden, dass das Kabel sowohl netzseitig als auch verbraucherseitig derart von dem elektrischen Netz abgeschaltet und galvanisch getrennt ist, dass alle Kabeladern potentialfrei sind und weder eine Verbindung untereinander noch zum Erd-/Massepotential haben.

Die Überwachungen bleiben somit im Wesentlichen so lange aktiv, wie das Kabel von dem Netz abgeschaltet und somit spannungslos ist. Es kann somit sichergestellt werden, dass nur ein Kabel mit ausreichendem Isolationswiderstand der Adern gegen Erd-/Massepotential und Kurzschlussfreiheit und somit ein störungsfreies Kabel dem elektrischen Netz zugeschaltet wird.

Durch das allpolige Abschalten des Kabels und die Deaktivierung der Überwachungen und der Messspannung vor dem Zuschalten des Kabels zu dem elektrischen Netz kann eine Überlagerung und gegenseitige Beeinflussung der Messspannung mit der Netzspannung, einer gegebenenfalls vorhandenen, übergeordneten Netzüberwachung (z.B. einer zentralen Isolationsüberwachung) für netzspannungsführende Kabel oder mit anderen aktiven Überwachungen zuverlässig verhindert werden.

Bevorzugt erfolgt die Aktivierung der Messspannungsbeaufschlagung, der Isolationsüberwachung und der Kurzschlussüberwachung aufgrund eines von der Überwachungsvorrichtung empfangenen Abschaltsignales und deren Deaktivierung aufgrund eines von der Überwachungseinrichtung empfangenen Zuschaltsignales. Diese Signale können von der Überwachungseinrichtung entweder über ein drahtgebundenes oder ein drahtloses Übertragungsmedium empfangen werden. Das Abschaltsignal signalisiert der Überwachungsvorrichtung, dass das Kabel allpolig von dem elektrischen Netz abgeschaltet ist. Das Zuschaltsignal signalisiert der Überwachungsvorrichtung, dass das abgeschaltete Kabel zugeschaltet werden soll.

Das Abschaltsignal kann hierbei direkt von einem oder mehreren Schaltgeräten zum allpoligen Abschalten bzw. Zuschalten des Kabels von bzw. zu dem elektrischen Netz erzeugt werden. Die Aktivierung der Überwachungen wird somit von dem (den) Schaltgerät(en) selbst gesteuert. Das Zuschaltsignal kann dann entweder von einem dem (den) Schaltgerät(en) zugeordneten manuell betätigbaren Signalgeber oder von einer übergeordneten Steuerungseinrichtung zur Steuerung der allpoligen Abschaltung bzw. Zuschaltung es Kabels von bzw. zu dem elektrischen Netz erzeugt werden. Die Deaktivierung der Überwachungen wird somit von dem manuell betätigbaren Signalgeber oder der übergeordneten Steuerungseinrichtung gesteuert.

Alternativ kann auch das Abschaltsignal, und vorzugsweise auch das Zuschaltsignal, von einer übergeordneten Steuerungseinrichtung zur Steuerung der allpoligen Abschaltung bzw. Zuschaltung des Kabels von bzw. zu dem elektrischen Netz erzeugt werden. Wenn sowohl das Abschaltsignal als auch das Zuschaltsignal von der übergeordneten Steuerungseinrichtung erzeugt werden, wird sowohl die Aktivierung als auch die Deaktivierung der Überwachungen von der übergeordneten Steuerungseinrichtung gesteuert.

Gemäß einer besonders vorteilhaften Ausgestaltung des erfindungsgemäßen Verfahrens erzeugt die Überwachungsvorrichtung ein Schaltfreigabesignal für ein Schalten eines oder mehrer Schaltgeräte zum Abschalten bzw. Zuschalten des Kabels von bzw. zu dem elektrischen Netz, wenn sie ein Zuschaltsignal empfängt und die Isolations- und Kurzschlussüberwachung nicht ausgelöst hat. Das Schaltfreigabesignal kann direkt als Steuersignal an das (die) Schaltgerät(e) übertragen werden und dort das Zuschalten des Kabels zu dem elektrischen Netz bewirken. Alternativ kann das Schaltfreigabesignal auch an eine übergeordneten Steuerungseinrichtung für das (die) Schaltgerät(e) übertragen werden, welche dann ihrerseits Steuersignale für das Schalten des (der) Schaltgeräte(s) erzeugt.

Durch das Schaltfreigabesignal wird somit die Fehlerfreiheit des Kabels angezeigt und ein Schalten des Schaltgerätes freigegeben. Umgekehrt bedeutet ein fehlendes Schaltfreigabesignal, dass ein Fehler im Kabel vorliegt. Ein Zuschalten des Kabels durch das Schaltgerät kann dann aufgrund der fehlenden Schaltfreigabe verhindert werden.

Vorzugsweise erfolgt die Deaktivierung, bevorzugt auch die Aktivierung, der Messspannungsbeaufschlagung, der Isolations-Überwachung und der Kurzschlussüberwachung innerhalb weniger als 1 Sekunde, vorzugsweise innerhalb weniger als 500 ms vor der Zuschaltung (bzw. nach der Abschaltung) des Kabels zu (bzw. von) dem Netz. Somit kann sichergestellt werden, dass die Überwachung bis kurz vor dem Zuschaltzeitpunkt aktiviert bleibt (bzw. kurz nach dem Abschaltzeitpunkt) aktiviert wird und gleichzeitig aber eine störende Beeinflussung des Netzes und seiner anderen aktiven Überwachungen vermieden wird.

Zeiten von weniger als 500 ms sind technisch machbar und können sogar noch deutlich niedriger realisiert werden. Die Verzögerungszeit für die Aktivierung der Überwachungen und der Messspannungsbeaufschlagung nach dem Abschalten des Kabels muss letztendlich nur so groß sein wie die Zeit, bis alle Schaltgeräte zum Abschalten des Kabels geschaltet haben und deren Lichtbögen sicher gelöscht sind sowie einer kurzen Zeitdauer als zusätzlicher Sicherheitsreserve (z.B. für das Abklingen von transienten Spannungen auf den Kabel). Die Verzögerungszeit für die Deaktivierung der Überwachungen und der Messspannungsbeaufschlagung vor dem Zuschalten des Kabels wird vor allem durch die Abschaltzeit für die Messspannungsbeaufschlagung sowie die Zeit zum Abklingen der Messspannung im Kabel aufgrund von Kapazitäten im Kabel bestimmt.

Eine für die Durchführung des erfindungsgemäßen Verfahrens geeignete Überwachungsvorrichtung umfasst eine Messspannungsversorgungseinheit zur Beaufschlagung der Adern eines Kabels mit einer Messspannung, eine Isolationsüberwachung zur Überwachung des Isolationswiderstandes der Adern des Kabels gegen Erd-/Massepotential eines elektrischen Netzes mit Hilfe der Messspannung, eine Kurzschlussüberwachung zur Überwachung der Adern des Kabels auf einen Kurzschluss zwischen zwei oder mehr Adern mit Hilfe der Messspannung sowie eine Steuerungseinheit, die bei Empfang eines Abschaltsignales die Beaufschlagung des Kabels mit der Messspannung, die Isolationsüberwachung und die Kurzschlussüberwachung aktiviert und bei Empfang eines Zuschaltsignals deaktiviert.

Das Abschalt- bzw. das Zuschaltsignal kann z.B. in Form eines über eine Signalleitung übertragenen 24 V Signals oder in Form eines über einen Kommunikationsbus oder drahtloses Kommunikationnetzwerk empfangenen Signales vorliegen. Entsprechend kann die Steuerungseinheit zum Empfang eines derartigen über eine Signalleitung übertragenen 24 V Signals und/oder eines über einen Kommunikationsbus oder ein drahtlosen Kommunikationnetzwerkes empfangenen Signales eingerichtet sein. Das Signal kann hierbei auch in Form eines Telegrammes, einer Meldung etc. vorliegen.

Bevorzugt umfasst die Überwachungsvorrichtung weiterhin eine Auswerteeinheit zur Erfassung einer Auslösung der Isolationsüberwachung und/oder der Kurzschlussüberwachung und zur Erzeugung eines Schaltfreigabesignales für ein oder mehrer Schaltgeräte zum allpoligen Zuschalten des Kabels zu dem elektrischen Netz, wenn die Isolations- und Kurzschlussüberwachung bei Empfang eines Zuschaltsignales nicht ausgelöst haben.

Bevorzugt ist das Schaltfreigabesignal ein Steuersignal für ein Schalten des (der) Schaltgeräte(s) zum Zuschalten des Kabels zu dem elektrischen Netz. Eine Zuschaltung eines störungsbehafteten Kabels zu dem elektrischen Netz kann dann von der Überwachungsvorrichtung selbst verhindert werden.

Das Schaltfreigabesignal kann aber auch eine Meldung an eine übergeordnete Steuerungs- und Überwachungseinrichtung zur Steuerung des Schaltens des (der) Schaltgeräte(s) zum Zuschalten des Kabels zu dem elektrischen Netz sein. Eine Zuschaltung eines störungsbehafteten Kabels zu dem elektrischen Netz muss dann von der übergeordneten Steuerungs- und Überwachungseinrichtung verhindert werden.

Bevorzugt ist die Messspannungsversorgungseinheit zur Spannungsversorgung über ein galvanisches Trennungselement (z.B. einen Trenntransformator oder einen DC/DC-Wandler) mit dem elektrischen Netz oder einem Hilfsnetz verbindbar. Hierdurch können Potenzialverschleppungen zwischen verschiedenen Kabeln des Netzes und somit Störungen der Überwachungsvorrichtung sowie anderer Überwachungseinrichtungen des elektrischen Netzes vermieden werden. Bei Verwendung einer von der Netzspannung bzw. einer Hilfsspannung galvanisch getrennten Messspannung können alle Kabel von ungeerdeten Netzen unabhängig von der Aderzahl, d.h. Drehstrom-, Wechselstrom- oder Gleichspannungsnetze, unabhängig von der Höhe der Netzspannung überwacht werden. Über das galvanische Trennungselement kann auch die Spannungsversorgung für die Isolationsüberwachung, die Kurzschlussüberwachung, die Steuerungseinheit und die Auswerteeinheit erfolgen.

Bei einem erfindungsgemäßen Überwachungssystem zur Überwachung mehrerer abschaltbarer Kabel in einem elektrischen Netz sind die abschaltbaren Kabel allpolig abschaltbar und jedem der Kabel ist eine vorstehend erläuterte Überwachungsvorrichtung zu dessen Isolations- und Kurzschlussüberwachung bei einer allpoligen Abschaltung des Kabels von dem elektrischen Netz zugeordnet.

Die einem Kabel zugeordnete Überwachungsvorrichtung, das (die) Schaltgerät(e) zur allpoligen Abschaltung bzw. Zuschaltung des Kabels sowie ein Signalgeber zur Erzeugung eines Zuschaltsignales für das Kabel können dann eine von einer übergeordneten Steuerungs- und Überwachungseinrichtung unabhängige, autarke Überwachungseinheit bilden, innerhalb der die Aktivierung und Deaktivierung der Überwachungen erfolgt. Jedem der zu überwachenden Kabel kann dann eine derartige autarke Überwachungseinheit zugeordnet sein.

Die einem Kabel zugeordnete Überwachungsvorrichtung und das (die) Schaltgerät(e) zur allpoligen Abschaltung bzw. Zuschaltung des Kabels können aber auch einer übergeordneten Steuerungs- und Überwachungseinrichtung zur Steuerung der allpoligen Abschaltung bzw. Zuschaltung der Kabel untergeordnet sein , wobei die übergeordnete Steuerungs- und Überwachungseinrichtung ein Abschaltsignal für die einem Kabel zugeordnete Überwachungsvorrichtung erzeugt, nachdem sie das Kabel allpolig vom Netz abgeschaltet hat, und ein Zuschaltsignal für die Überwachungsvorrichtung erzeugt, bevor sie das Kabel dem elektrischen Netz zuschaltet. Die Abschaltsignale und die Zuschaltsignale werden dann von der übergeordnete Steuerungs- und Überwachungseinrichtung erzeugt, die somit auch die Aktivierung bzw. Deaktivierung der Überwachungen steuert.

Die Erfindung sowie weitere vorteilhafte Ausgestaltungen der Erfindung gemäß den Merkmalen der Unteransprüche wird im Folgenden anhand von Ausführungsbeispiele in den Figuren näher erläutert. Darin zeigen:
- FIG 1: eine Prinzipschaltung einer erfindungsgemäßen Überwachungsvorrichtung und
- FIG 2: eine Prinzipschaltung eines erfindungsgemäßen Überwachungssystems.

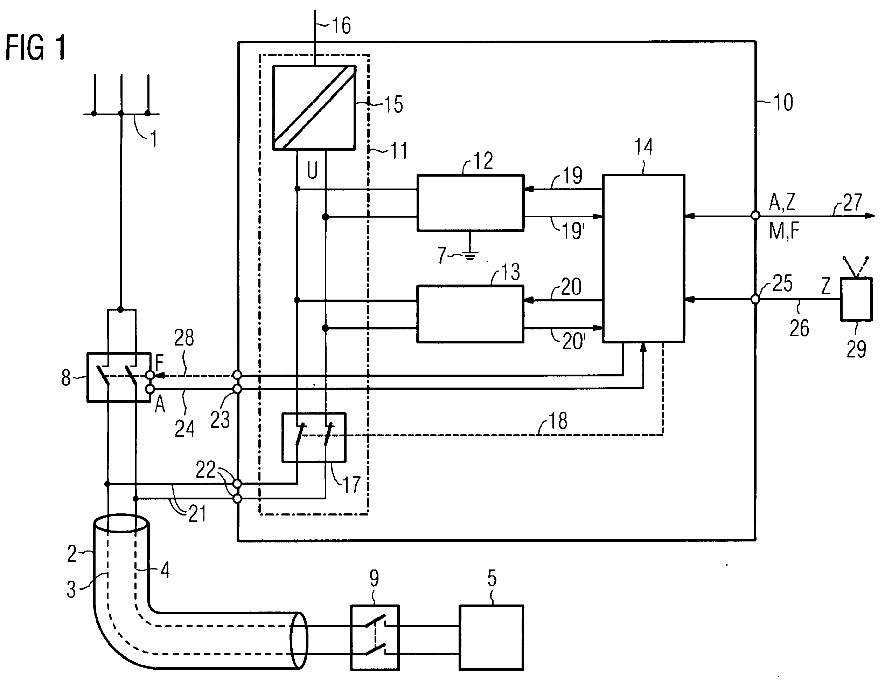

FIG 1 zeigt ein Stromversorgungskabel 2 für einen Verbraucher 5, das durch zwei Schaltgeräte 8, 9 allpolig von einem elektrischen Netz 1 und dem Verbraucher 5 abgeschaltet bzw. zugeschaltet werden kann. Bei dem elektrischen Netz 1 handelt es sich beispielsweise um das Bordnetz eines Marineschiffes und bei dem Stromversorgungskabel 2 um eine Ersatzspeisung für einen Hauptverteiler eines derartigen Bordnetzes. Eine derartige Ersatzspeisung ist im Normalfall von dem Bordnetz abgeschaltet und wird erst bei Bedarf, d.h. bei einem Ausfall einer Hauptspeisung, dem Netz 1 zugeschaltet. Unter einem allpoligen Abschalten des Kabels wird hierbei verstanden, dass das Kabel sowohl netzseitig als auch verbraucherseitig abgeschaltet und galvanisch getrennt ist, so dass alle Kabeladern potentialfrei sind und weder eine Verbindung untereinander noch zu Erd-/Massepotential haben. Im dargestellten Fall ist das Kabel 2 mit seinen Adern 3, 4 von dem Netz 1 und dem Verbaucher 5 abgeschaltet und damit spannungslos und ungeerdet.

Um ein Zuschalten des Kabels 2 zu dem Netz 1 bei einer Störung des Kabels 2, d.h. bei einem bestehenden Kurzschluss zwischen den Adern 3 und 4 des Kabels oder einem Isolationsfehler zu verhindern, ist dem Kabel 2 eine Überwachungsvorrichtung 10 zu dessen Überwachung zugeordnet. Die Überwachungsvorrichtung 10 weist eine Messspannungsversorgungseinheit 11, eine Isolationsüberwachung 12, eine Kurzschlussüberwachung 13 sowie eine Steuerungs- und Auswerteeinheit 14 auf.

Die Messspannungsversorgungseinheit 11 dient zur Spannungsversorgung der Isolationsüberwachung 12, der Kurzschlussüberwachung 13 und der Steuerungs- und Auswerteeinheit 14 sowie zur Bereitstellung einer Messspannung U. Sie ist hierzu über ein galvanisches Trennungselement 15 (z.B. einen Trenntransformator oder einen Wandler) und eine Versorgungsleitung 16 mit dem elektrischen Netz 1 oder einem batteriegestütztem Hilfsnetz verbindbar.

Zur Beaufschlagung der Adern 3, 4 des Kabels 2 mit der Messspannung U ist die Überwachungsvorrichtung 10 über Verbindungsleitungen 21 fest mit den Adern 3, 4 des Kabels 2 verbunden. Die Verbindungsleitungen 21 sind z.B. an einer Klemmleiste am Schaltgerät 8 mit den Enden der Adern 3, 4 verbunden. Durch Schließen eines Schalters 17 können die Verbindungsleitungen 21 und somit die Adern 3, 4 des Kabels 2 mit der am Ausgang des galvanischen Trennungselement 15 anliegenden Messspannung U beaufschlagt werden.

Die Steuerungs- und Auswerteeinheit 14 steuert über eine Steuerleitung 18 die Schaltstellung des Schalters 17 und über Steuerleitungen 19, 20 die Aktivierung und Deaktivierung der Isolationsüberwachung 12 bzw. der Kurzschlussüberwachung 13. Eine Auslösung der Isolationsüberwachung 12 wird der Steuerungs- und Auswerteeinheit 14 von der Isolationsüberwachung 12 über eine Signalleitung 19' signalisiert. In entsprechender Weise wird der Steuerungs- und Auswerteeinheit 14 eine Auslösung der Kurzschlussüberwachung 13 über eine Leitung 20' signalisiert.

Die Überwachungsvorrichtung 10 ist dazu eingerichtet, ein Abschaltsignal A von dem Schaltgerät 8 zu empfangen. Sie weist hierzu einen Signaleingang 23 auf, der über eine Signalleitung 24 mit einem nicht näher dargestellten Signalgeber in dem Schaltgerät 8 verbunden ist. Das Abschaltsignal A wird von dem Schaltgerät 8 erzeugt, wenn das Kabel 2 vom Netz 1 abgeschaltet wird bzw. ist. Für die Erzeugung derartiger Abschaltsignale sind dem Fachmann zahlreiche Möglichkeiten bekannt. Zum Beispiel kann der Signaleingang 23 mit einem potentialfreien Hilfskontakt im Schaltgerät 8 verbunden sein, der wiederum mit den Hauptkontakten des Schaltgerätes 8 gekoppelt ist, die die Adern 3,4 des Kabels 2 schalten, und der bei einem Schalten der Hauptkontakte eine Steuerspannung auf der Signalleitung 24 schaltet. Bevorzugt wird die Steuerspannung hierbei von der Überwachungsvorrichtung selbst bereitgestellt, wozu diese über eine nicht näher dargestellte Verbindungsleitung mit dem Hilfskontakt verbunden ist. Die Steuerspannung kann z.B. von der Steuerungs- und Auswerteeinheit bereitgestellt werden und wird für diese wiederum von der Messspannungsversorgungseinheit 11 erzeugt.

Bei der in Figur 1 dargestellten Schaltung wird davon ausgegangen, dass durch eine geeignete Beschaltung der Schaltgeräte 8, 9 sichergestellt ist, dass das Schaltgerät 9 gleichzeitig mit oder in der definierten Zeitspanne nach dem Schaltgerät 8 schaltet, so dass das Kabel 2 netzseitig und verbraucherseitig gleichzeitig oder in einer definierten Zeitspanne kurz nacheinander zugeschaltet bzw. gleichzeitig oder kurz nacheinander erst verbraucher- und dann netzseitig abgeschaltet wird.

Beispielsweise kann das Schalten des Schaltgerätes 9 zum allpoligen verbraucherseitigen Abschalten des Kabels automatisch durch eine nicht näher dargestellte Spannungsüberwachung des Kabels 2 ausgelöst werden, die das Abschalten auslöst, wenn sie einen Spannungsausfall auf dem Kabel 2 detektiert.

Ist eine derartige Beschaltung nicht gegeben, d.h. die beiden Schaltgeräte 8, 9 werden unabhängig voneinander gesteuert, müssen Abschaltsignale beider Schaltgeräte 8, 9 ausgewertet werden. Hierzu kann dem Signaleingang 23 eine Auswerteschaltung (z.B. in Form einer logischen "UND" - Verknüpfung der beiden Abschaltsignale) vorgeschaltet werden, die erst dann ein Abschaltsignal A für den Signaleingang 23 der Überwachungsvorrichtung 10 erzeugt, wenn sie von beiden Schaltgeräten 8, 9 ein Abschaltsignal empfangen hat. Alternativ kann die Funktion dieser Auswerteschaltung auch in der Überwachungsvorrichtung 10 integriert werden. Die Überwachungsvorrichtung 10 weist dann einen (nicht dargestellten) zweiten Signaleingang auf, der über eine ebenfalls nicht näher dargestellte Signalleitung mit einem potentialfreien Hilfskontakt im Schaltgerät 9 verbunden ist, der wiederum mit den Hauptkontakten des Schaltgerätes 9 gekoppelt ist, die die Adern 3,4 des Kabels 2 schalten, und der bei einem Schalten der Hauptkontakte eine Steuerspannung auf der Signalleitung schaltet. Bevorzugt wird die Steuerspannung hierbei von der Überwachungsvorrichtung selbst bereitgestellt, wozu diese über eine nicht näher dargestellte Verbindungsleitung mit dem Hilfskontakt verbunden ist. Die Steuerspannung kann z.B. von der Steuerungs- und Auswerteeinheit bereitgestellt werden und wird für diese wiederum von der Messspannungsversorgungseinheit 11 erzeugt.

Die Überwachungen 12, 13 werden in diesem Fall durch die Steuerungs- und Auswerteeinheit 14 erst dann aktiviert, wenn sie Abschaltsignale von beiden Schaltgeräten 8,9 empfangen hat.

Weiterhin ist die Überwachungsvorrichtung 10 dazu eingerichtet, ein Zuschaltsignal Z für ein Zuschalten des Kabels 2 zu dem elektrischen Netz 1 und dem Verbraucher 5 zu empfangen. Die Überwachungsvorrichtung 10 weist hierzu einen weiteren Signaleingang 25 auf, und an dem eine Signalleitung 26 angeschlossen ist, die mit einem, vorzugsweise potenzialfreien, Kontakt eines manuell betätigbaren Schalters 29 verbunden ist, der ein Zuschaltsignal erzeugt, wenn er in eine Schalterstellung geschaltet wird, in der ein Zuschalten des Kabels 2 zu dem elektrischen Netz 1 angefordert wird.

Empfängt die Steuerungs- und Auswerteeinheit 14 bei aktvierter Kurzschlussüberwachung 13 und aktivierter Isolationsüberwachung 12 ein Zuschaltsignal Z und hat weder die Kurzschlussüberwachung 13 noch die Isolationsüberwachung 12 der Steuerungs- und Auswerteeinheit 14 eine Auslösung signalisiert, erzeugt die Steuerungs- und Auswerteeinheit 14 ein Schaltfreigabesignal F, das über eine Leitung 28 an das Schaltgerät 8 übertragen wird und dort ein Schalten des Schaltgerätes 8 zum Zuschalten des Kabels 2 zu dem elektrischen Netz 1 bewirkt. Falls notwendig, kann das Schaltfreigabesignal F parallel auch noch an das Schaltgerät 9 übertragen werden und dort ein Schalten des Schaltgerätes 9 zum Zuschalten des Kabels 2 zu dem Verbraucher V bewirken.

Wird nun im Betrieb das Kabel 2 netzseitig und verbraucherseitig allpolig abgeschaltet, wird dies der Steuerungs- und Auswerteeinheit 14 über die Leitung 24 signalisiert und die Steuerungs- und Auswerteeinheit 14 aktiviert die Beaufschlagung der Adern 3, 4 des Kabels 2 mit der Messspannung U, die Isolationsüberwachung 12 und die Kurzschlussüberwachung 13.

Die Isolationsüberwachung 12 überwacht mit Hilfe der Messspannung U den Isolationswiderstand des Kabels gegen Erd-/Massepotenzial 7.

Die Kurzschlussüberwachung 13 überwacht mit Hilfe der Messspannung U die Adern 3,4 auf einen Kurzschluss zwischen den Kabeladern nach dem Prinzip einer Unterspannungsüberwachung oder einer Stromüberwachung.

Die Isolationsüberwachung 12 und die Kurzschlussüberwachung 13 melden eine Auslösung über die Signalleitungen 19' bzw. 20' an die Steuerungs- und Auswerteeinheit 14. Bei Erhalt eines Zuschaltsignales Z und bei Nichtauslösung sowohl der Isolations- als auch der Kurzschlussüberwachung 12 bzw. 13 deaktiviert die die Steuerungs- und Auswerteeinheit 14 die Beaufschlagung der Adern 3, 4 des Kabels 2 mit der Messspannung U, die Isolationsüberwachung 12 und die Kurzschlussüberwachung 13 und erzeugt ein Schaltfreigabesignal F, das über die Leitung 28 an das Schaltgerät 8 übertragen wird und ein Schalten des (der) Schaltgeräte(s) 8, 9 bewirkt.

Das Kabel 2 ist somit nur während der Zeit der allpoligen netzseitigen und verbraucherseitigen Abschaltung mit der Messspannung U beaufschlagt und wird mit der Überwachungsvorrichtung 10 auf Kurzschluss und Isolationsfehler überwacht. Eine Überlagerung und Beeinflussung des elektrischen Netzes und ggf. anderer darin aktiver Überwachungen wird dadurch sicher vermieden.

Wenn das Schalten der Schaltgeräte 8, 9 durch eine nicht näher dargestellte, übergeordnete Steuerungs- und Überwachungseinrichtung gesteuert und überwacht wird, können alternativ das (die) Abschaltsignal(e) A und/oder das(die) Zuschaltsignal(e) Z auch von der übergeordneten Steuerungs- und Überwachungseinrichtung erzeugt bzw. das Schaltfreigabesignal F an diese übergeordnete Steuerungs- und Überwachungseinrichtung übertragen werden. Die Übertragung dieser Signale kann dann beispielsweise über einen Kommunikationsbus 27 erfolgen.

Außerdem kann eine Information über das Auslösen bzw. Nichtauslösen der Überwachungen 12, 13 als eine Meldung M über den Kommunikationsbus 27, an die übergeordnete Steuerungs- und/oder Überwachungseinrichtung übertragen werden.

Wird die Aktivierung der Überwachungen 12, 13 von dem Schaltgerät 8 (und ggf. dem Schaltgerät 9) und die Deaktivierung durch den Schalter 29 gesteuert, bildet die Überwachungsvorrichtung 10 zusammen mit den Schaltgeräten 8, 9 und dem Schalter 29 eine von einer übergeordnete Steuerungs- und/oder Überwachungseinrichtung unabhängige, autarke Überwachungseinheit.

In einem elektrischen Netz mit mehreren zu überwachenden, allpolig abschaltbaren Kabeln kann jedem zu überwachenden Kabel eine Überwachungsvorrichtungen 10 zu dessen Überwachung zugeordnet werden, die mit den jeweils zugeordneten Schaltgeräten und dem zugeordnetem Schalter eine autarke Überwachungseinheit bildet.

Vorzugsweise erfolgt die Deaktivierung bzw. die Aktivierung der Messspannungsbeaufschlagung, der Isolationsüberwachung und der Kurzschlussüberwachung innerhalb weniger als 1 Sekunde, vorzugsweise innerhalb weniger als 500 ms vor der Zuschaltung bzw. nach dem Abschalten des Kabels zu bzw. von dem Netz. Somit kann sichergestellt werden, dass die Überwachung bis kurz vor dem Zuschaltzeitpunkt aktiviert bleibt bzw. kurz nach dem Abschaltzeitpunkt aktiviert wird und gleichzeitig aber eine störende Beeinflussung des Netzes und seiner anderen aktiven Überwachungen vermieden wird.

Die unteren Grenzen für die Aktivierung/Deaktivierung der Überwachungen ist im Wesentlichen abhängig von den mechanisch bedingten Eigenzeiten der Schaltgeräte 8, 9 (Öffnungs- bzw. Schließverzug), der Zeit bis zum Verlöschen der Lichtbögen in den Schaltgeräten und ob nur das Abschaltsignal des Schaltgerätes 8 oder aber die Abschaltsignale beider Schaltgeräte 8, 9 ausgewertet werden.

Wird die Aktivierung der Überwachungen beim Abschalten des Kabels von einem Hilfskontakt eines Schaltgerätes gesteuert, muss der Öffnungsverzug des Schaltgerätes (ca. 20-50 ms bei einem Leistungsschütz, ca. 30-60 ms bei einem Leistungsschalter) für die Verzögerung der Aktivierung üblicherweise nicht berücksichtigt werden, da der Hilfskontakt annähernd zeitgleich mit den Hauptkontakten schaltet.

Als Verzögerungszeit für das Aktivieren der Überwachung ist jedoch noch die Zeit bis zum sicheren Verlöschen des Lichtbogens zu berücksichtigen, diese kann üblicherweise mit ca. 10-25 ms angesetzt werden (plus eine kurze Zeitdauer als "Sicherheitsreserve").

Wenn kein Abschaltsignal des Schaltgerätes 9 ausgewertet wird, muss ggf. eine zusätzlich Verzögerungszeit bis zum Abschalten des Schaltgerätes 9 sowie dessen Öffnungsverzug und Zeit bis zum sicheren Verlöschen des Lichtbogens berücksichtigt werden.

Beim Deaktivieren der Überwachung wird das Schaltfreigabesignal an das Schaltgerät erteilt und die Zuschaltung des Kabels erfolgt nach der mech. Eigenzeit des Schaltgerätes. Als Verzögerungszeit für das Deaktivieren der Überwachungseinheit vor dem Schaltfreigabesignal ist im Wesentlichen die Abschaltzeit des Schalters 17 der Überwachungsvorrichtung (Abschaltung der Messspannung mit Öffnungsverzug) sowie eine kurze Zeit zum Abklingen der Messspannung aufgrund der Kapazitäten im Kabel zu berücksichtigen (und ggf. eine kurze Zeitdauer als Sicherheitsreserve).

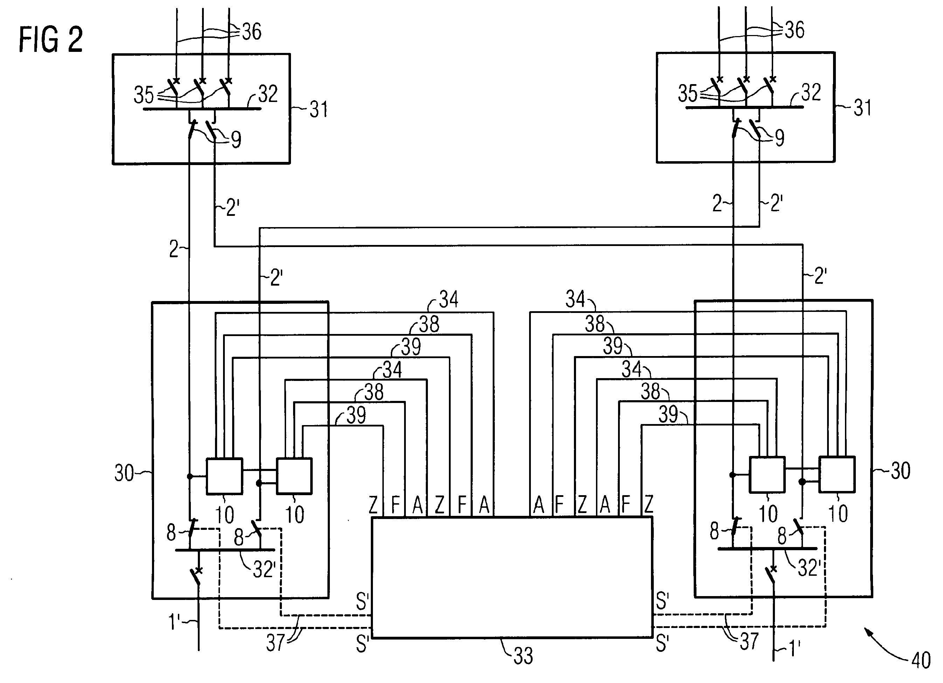

Die Überwachungsvorrichtungen 10 der einzelnen Kabel können aber auch, wie in FIG 2 dargestellt, einer zentralen, übergeordneten Steuerungs- und Überwachungseinrichtung 33 (z.B. einer SPS-Steuerung) für die Kabel untergeordnet sein und mit dieser ein Überwachungssystem 40 bilden. Die Steuerung der Schaltgeräte und der Überwachungsvorrichtungen 10 erfolgt dann durch die übergeordnete Steuerungs- und Überwachungseinrichtung 33.

FIG 2 zeigt hierzu beispielhaft ein Überwachungssystem 40 für vier Stromversorgungskabel 2, 2' in einem Bordnetz eines Schiffes. Die Stromversorgungskabel 2, 2' dienen zur Speisung von Hauptverteilern 31 aus räumlich getrennt voneinander aufgestellten Hauptschalttafeln 30.

Jeder der zwei Hauptverteiler 31 weist beispielsweise drei Abgangskabel 36 zur Versorgung nicht näher dargestellter elektrischer Verbraucher oder Verbrauchergruppen des Schiffes auf, wobei die Abgangskabel 36 jeweils über Schaltgeräte 35 mit einer Sammelschiene 32 des Hauptverteilers 31 verbunden sind. Die Hauptschalttafeln 30 werden wiederum über Sammelschienen 32' aus zwei nicht näher dargestellten Teilnetzen 1' gespeist.

Zur Erhöhung der Versorgungssicherheit können die Hauptverteiler 31 aus beiden Hauptschalttafeln 30 mit Strom versorgt werden, wobei eine nicht näher dargestellte Umschalteinrichtung mit Netzspannungserfassung und Verriegelung in jedem der Hauptverteiler 31 dafür sorgt, dass immer nur eines der beiden Stromversorgungskabel 2, 2' der Sammelschiene 32 zugeschaltet ist. Die Stromversorgungskabel 2, 2' sind mit Hilfe von Schaltern 8, 9 allpolig in den Hauptschalttafeln 30 und Hauptverteilern 31 zuschaltbar bzw. abschaltbar.

Bei dem in FIG 2 dargestellten Normalbetrieb sind, wie an der Schalterstellung der Schalter 8, 9 erkennbar, nur die Stromversorgungskabel 2 einem Teilnetz 1' und einer Sammelschiene 32 zugeschaltet, während die Stromversorgungskabel 2' allpolig von den Teilnetzen 1' und Sammelschienen 32 abgeschaltet und somit ungeerdet und spannungslos sind. Eine Zuschaltung eins Stromversorgungskabels 2' zu einem Teilnetz 1' und einer Sammelschiene 32 erfolgt erst, wenn aufgrund einer Störung das jeweils zugeordnete Stromversorgungskabel 2 abgeschaltet werden muss. Die Stromversorgungskabel 2 werden deshalb auch als "Hauptspeisekabel" und die Stromversorgungskabel 2' als "Ersatzspeisekabel" bezeichnet. Die einem Hauptverteiler 31 zugeordnete Umschalteinrichtung überwacht das jeweilige Hauptspeisekabel 2 des Hauptverteilers 31 auf Netzspannung. Wenn die Umschalteinrichtungen einen Netzspannungsausfall auf dem Kabel 2 detektiert, schaltet sie, ggf. nach einer vorgegebenen Verzögerungszeit, automatisch das Hauptspeisekabel 2 allpolig von der Sammelschiene 32 des Hauptverteilers 31 ab und das zugeordnete Ersatzspeisekabel 2' der Sammelschiene 32 dieses Hauptverteilers 31 zu. Eine Verriegelung stellt sicher, dass jeweils nur eines der beiden Kabel 2, 2' der Sammelschiene 32 zugeschaltet ist. Die vorgegebene Verzögerungszeit kann beispielsweise dadurch begründet sein, dass die Umschalteinrichtung bei Detektierung eines Netzspannungsausfalls erst noch für eine definierte Zeit eine Rückkehr der Netzspannung abwartet, bis sie vom Hauptspeisekabel 2 auf das Ersatzspeisekabel 2' umschaltet.

Die übergeordnete Steuerungs- und Überwachungseinrichtung 33 dient zum einen der Steuerung der Schaltung der Schaltgeräte 8. Die hierzu von der übergeordneten Steuerungs- und Überwachungseinrichtung 33 erzeugten Steuersignale S' werden über Signalleitungen 37 an die Schaltgeräte 8 übertragen. Eine Steuerung der Schaltgeräte 9 durch die übergeordnete Steuerungs- und Überwachungseinrichtung 33 ist grundsätzlich möglich, aber im Fall des Ausführungsbeispieles aufgrund der vorstehend erläuterten Umschalteinrichtungen nicht notwendig.

Jedem der Haupt- und Ersatzspeisekabel 2, 2' ist eine Überwachungsvorrichtung 10 entsprechend FIG 1 zugeordnet. Die Aktivierung der Überwachungsvorrichtungen 10, d.h. die Beaufschlagung der Adern der Kabel 2' (bzw. 2) mit einer Messspannung sowie die Aktivierung der jeweiligen Isolations- und der Kurzschlussüberwachung, erfolgt ebenfalls durch die zentrale übergeordnete Steuerungs- und Überwachungseinrichtung 33, die hierfür Abschaltsignale A und Zuschaltsignale Z erzeugt, die über Signalleitungen 34 bzw. 39 an die Überwachungsvorrichtungen 10 übertragen werden. Von den Überwachungsvorrichtungen 10 erzeugte Schaltfreigabesignale F werden über Signalleitungen 38 an die übergeordnete Steuerungs- und Überwachungseinrichtung 33 übertragen. Ein Abschaltsignal A von einem Schaltgerät 9 zum Nachweis, dass ein Kabel 2, 2' auch verbraucherseitig allpolig abgeschaltet ist, ist aufgrund der automatischen Umschalteinrichtungen mit Netzspannungserfassung und Verriegelung nicht unbedingt notwendig; im Fall einer netzseitigen allpoligen Abschaltung liegt keine Netzspannung am Kabel 2, 2' an, so dass das Kabel 2, 2' vor der Umschalteinrichtung automatisch auch verbraucherseitig allpolig abgeschaltet ist. Wenn das Schaltgerät 9 durch die Umschalteinrichtung zeitverzögert abgeschaltet wird, z.B. bei Spannungseinbrüchen in Folge von Kürzschlüssen im Netz bis zur möglichen Spannungswiederkehr, kann die Auswertung eines Abschaltsignales vom Schaltgerät 9 zur Optimierung der Aktivierungszeit der Überwachungen jedoch sinnvoll sein.

Die zentrale, übergeordnete Steuerungs- und Überwachungseinrichtung 33 schaltet die Schaltgeräte 8 (bzw. 9) bei Anforderung einer Zuschaltung nur bei Vorliegen eines Schaltfreigabesignals F der zugehörigen Überwachungsvorrichtung 10. Neben der Aktivierung bzw. Deaktivierung der einzelnen Überwachungsvorrichtungen 10 bei Ab- oder Zuschalten des zugehörigen Kabels von bzw. zu dem jeweiligen Teilnetz 1' kann durch die zentrale, übergeordnete Steuerungs- und Überwachungseinrichtung 33 mittels weiterer, nicht dargestellter Steuersignale, die Überwachungsvorrichtungen 10, z.B. bei ausgeschaltetem elektrischen Teilnetz 1', auch temporär deaktiviert werden. Außerdem kann durch die zentrale, übergeordnete Steuerungs- und Überwachungseinrichtung 33 ein zyklischer Funktionstest der einzelnen Überwachungsvorrichtungen 10 angestoßen werden. Die Überwachungsvorrichtungen 10 und die zentrale, übergeordnete Steuerungs- und Überwachungseinrichtung 33 bilden somit ein eigenständig arbeitendes Überwachungssystem 40.

## Patentansprüche

1. Verfahren zur Überwachung eines abschaltbaren Stromversorgungskabels (2) für einen Verbraucher (5) in einem elektrischen Netz (1) mit Hilfe einer Überwachungsvorrichtung (10), wobei das Kabel (2) sowohl netzseitig als auch verbraucherseitig derart von dem elektrischen Netz (1) abgeschaltet und galvanisch getrennt wird, dass alle Adern (3, 4) des Kabels (2) potentialfrei sind und weder eine Verbindung untereinander noch zu einem Erd-/Massepotential haben, **dadurch gekennzeichnet dass** die Überwachungsvorrichtung (10) nach diesem Abschalten des Kabels (2)
- eine Beaufschlagung des Kabels (2) mit einer Messspannung (U),
- eine Isolationsüberwachung (12) zur Überwachung des Isolationswiderstandes der Adern (3, 4) des Kabels (2) gegen Erd-/Massepotential (7) des elektrischen Netzes (1) mit Hilfe der Messspannung (U) und
- eine Kurzschlussüberwachung (13) zur Überwachung der Adern (3, 4) auf einen Kurzschluss zwischen zwei oder mehr Adern (3, 4) mit Hilfe der Messspannung (U) aktiviert und vor einem Zuschalten des Kabels (2) zu dem elektrischen Netz deaktiviert.

2. Verfahren nach Anspruch 1,
**dadurch gekennzeichnet, dass** die Aktivierung der Messspannungsbeaufschlagung, der Isolationsüberwachung (12) und der Kurzschlussüberwachung (13) aufgrund eines von der Überwachungsvorrichtung (10) empfangenen Abschaltsignals (A) und deren Deaktivierung aufgrund eines von der Überwachungseinrichtung empfangenen zuschaltsignales (Z) erfolgt.

3. verfahren nach Anspruch 2,
**dadurch gekennzeichnet, dass** das Abschaltsignal (A) von einem oder mehreren Schaltgerät (en) (8, 9)zum allpoligen Abschalten bzw. Zuschalten des Kabels (2) von bzw. zu dem elektrischen Netz (1) erzeugt wird.

4. Verfahren nach Anspruch 2,
**dadurch gekennzeichnet, dass** das Abschaltsignal (A), und vorzugsweise auch das zuschaltsignal (Z), von einer übergeordneten Steuerungseinrichtung (33) zur Steuerung der allpoligen Abschaltung bzw. Zuschaltung des Kabels (2) von bzw. zu dem elektrischen Netz (1) erzeugt wird.

5. Verfahren nach einem der vorhergehenden Ansprüche,
**dadurch gekennzeichnet, dass** die Überwachungsvorrichtung (10) ein Schaltfreigabesignal (F) für ein Schalten eines oder mehrerer Schaltgeräte (8, 9) zum allpoligen Abschalten bzw. Zuschalten des Kabels (2) von bzw. zu dem elektrischen Netz (1) erzeugt, wenn sie ein Zuschaltsignal (Z) empfängt und die Isolationsüberwachung (12) und die Kurzschlussüberwachung (13) nicht ausgelöst haben.

6. Verfahren nach einem der vorhergehenden Ansprüche,
**dadurch gekennzeichnet, dass** die Deaktivierung der Messspannungsbeaufschlagung, der Isolationsüberwachung und der Kurzschlussüberwachung innerhalb weniger als 1 Sekunde, vorzugsweise innerhalb weniger als 500 ms, vor der Zuschaltung des Kabels (2) zu dem Netz (1) erfolgt.

## Claims

1. Method for monitoring a power supply cable (2) for a load (5) which can be disconnected in an electrical network (1) with the aid of a monitoring device (10), wherein the cable (2) is disconnected and galvanically separated from the electrical network (1) both on the network side and also on the load side such that all wires (3, 4) of the cable (2) are free of potential and have no connection with one another nor with an earth/ground potential, **characterised in that** after this disconnection of the cable (2) the monitoring device (10) activates
- an application of a measurement voltage (U) to the cable (2),
- an insulation monitoring (12) for monitoring the insulation resistance of the wires (3, 4) of the cable (2) against earth/ground potential (7) of the electrical network (1) with the aid of the measurement voltage (U) and
- a short-circuit monitoring (13) for monitoring the wires (3, 4) for a short-circuit between two or more wires (3, 4) with the aid of the measurement voltage (U) and prior to connecting the cable (2) to the electrical network deactivates the same.

2. Method according to claim 1,
**characterised in that** the activation of the measurement voltage application, the insulation monitoring (12) and the short-circuit monitoring (13) on account of a disconnection signal (A) received by the monitoring device (1) and its deactivation takes place on the basis of a connection signal (Z) received by the monitoring facility.

3. Method according to claim 2,
**characterised in that** the disconnection signal (A) is generated by one or a number of switching device(s) (8, 9) for all-pole disconnection or connection of the cable (2) from or to the electrical network (1).

4. Method according to claim 2,
**characterised in that** the disconnection signal (A) and preferably also the connection signal (Z) is generated by a superordinate control facility (33) for controlling the all-pole disconnection or connection of the cable (2) from or to the electrical network (1).

5. Method according to one of the preceding claims,
**characterised in that** the monitoring device (10) generates a switching release signal (F) for switching one or a number of switching devices (8, 9) for all-pole disconnection or connection of the cable (2) from or to the electrical network (1) if it receives a connection signal (Z) and it has not triggered the insulation monitoring (12) and the short-circuit monitoring (13).

6. Method according to one of the preceding claims,
**characterised in that** the deactivation of the measurement voltage application, the insulation monitoring and the short-circuit monitoring takes place within less than 1 second, preferably within less than 500 ms, before the cable (2) is connected to the network (1).

## Revendications

1. Procédé de contrôle d'un câble (2) d'alimentation en courant pouvant être déconnecté pour un consommateur (5) d'un réseau ( 1 ) électrique à l'aide d'un dispositif ( 10 ) de contrôle, le câble étant, à la fois du côté du réseau et du côté du consommateur, déconnecté et séparé galvaniquement du réseau ( 1 ) électrique, de manière à ce que tous les brins ( 3, 4 ) du câble ( 2 ) soient sans potentiel et qu'il n'y ait ni une liaison entre eux, ni un potentiel de terre/masse, **caractérisé en ce que** le dispositif ( 10 ) de contrôle, après cette déconnexion du câble ( 2 ), active
- l'application au câble (2) d'une tension ( U ) de mesure,
- un contrôle ( 12 ) d'isolation pour contrôler la résistance isolante des brins ( 3, 4 ) du câble ( 2 ) à l'encontre du potentiel ( 7 ) de terre/masse du réseau ( 1 ) électrique à l'aide de la tension ( U ) de mesure et
- à l'aide de la tension ( U ) de mesure, un contrôle ( 13 ) de court-circuit pour contrôler les brins ( 3, 4 ) sur le point de savoir s'il y a un court-circuit entre deux ou plusieurs brins ( 3, 4 ) et désactive avant une connexion du câble ( 2 ) au réseau électrique.

2. Procédé suivant la revendication 1,
**caractérisé en ce que** l'activation de l'application de la tension de mesure du contrôle ( 12 ) d'isolation et du contrôle de court-circuit s'effectue sur la base d'un signal ( A ) de déconnexion reçu par le dispositif ( 10 ) de contrôle et sa désactivation sur la base d'un signal ( Z ) de connexion reçu par le dispositif de contrôle.

3. Procédé suivant la revendication 2,
**caractérisé en ce qu'**on produit le signal ( A ) de déconnexion par un ou par plusieurs appareils ( 8, 9 ) de commutation pour la déconnexion de tous les pôles du câble (2) du réseau ( 1 ) électrique ou la connexion de tous les pôles du câble ( 2 ) au réseau ( 1 ) électrique.

4. Procédé suivant la revendication 2,
**caractérisé en ce qu'**on produit le signal ( A ) de déconnexion et, de préférence également, le signal ( Z ) de déconnexion par un dispositif ( 33 ) de commande supérieur hiérarchiquement de commande de la déconnexion de tous les pôles du câble (2) du réseau ( 1 ) électrique ou de la connexion de tous les pôles du câble ( 2 ) au réseau ( 1 ) électrique.

5. Procédé suivant l'une des revendications précédentes,
**caractérisé en ce que** le dispositif ( 10 ) de contrôle produit un signal ( F ) de libération de commutation pour une commutation d'un ou de plusieurs appareils ( 8, 9 ) de commutation pour la déconnexion de tous les pôles du câble ( 2 ) au réseau ( 1 ) électrique ou pour la connexion de tous les pôles du câble (2) au réseau ( 1 ) électrique, s'il reçoit un signal ( 2 ) de connexion et si le contrôle ( 12 ) d'isolation et le contrôle ( 13 ) de court-circuit ne se sont pas déclenchés.

6. Procédé suivant l'une des revendications précédentes,
**caractérisé en ce que** la désactivation de l'application de la tension de mesure du contrôle d'isolation et du contrôle de court-circuit s'effectue en moins de 1 seconde, de préférence en moins de 500 ms, avant la connexion du câble ( 2 ) au réseau ( 1 ).
